## Europäisches Patentamt
## European Patent Office
## Office européen des brevets

(19)

(11) Numéro de publication: **0 008 270**
**B1**

(12) **FASCICULE DE BREVET EUROPEEN**

(45) Date de publication du fascicule du brevet: 08.12.82

(51) Int. Cl.³: **B 65 G 53/42**

(21) Numéro de dépôt: **79400546.2**

(22) Date de dépôt: **02.08.79**

(54) Procédé et ensemble de transfert pneumatique d'un matériau pulvérulent.

(30) Priorité: 11.08.78 FR 7823733

(43) Date de publication de la demande:
20.02.80 Bulletin 80/4

(45) Mention de la délivrance du brevet:
08.12.82 Bulletin 82/49

(84) Etats contractants désignés:
BE DE GB

(56) Documents cités:
DE - A - 1 927 489
DE - B - 1 255 572
GB - A - 16 855
US - A - 3 991 834
US - A - 4 029 364

(73) Titulaire: COMMISSARIAT A L'ENERGIE
ATOMIQUE Etablissement de Caractère
Scientifique Technique èt Industriel
B.P. 510
F-75752 Paris Cedex 15 (FR)

(72) Inventeur: Bourdois, Claude
35, Rue Charles Gounot
F-91120 Palaiseau (FR)
Inventeur: Decolle, Maurice
5, rue du Colombier
F-91420 Morangis (FR)
Inventeur: Ferard, Michel
80 bis, Avenue de Tobrouk
F-78500 Sartrouville (FR)
Inventeur: Marchal, Paul
1-13, Résidence du Parc du Château de Courcelles
F-91190 Gif-Sur-Yvette (FR)

(74) Mandataire: Mongrédien, André et al,
c/o Brevatome 25, rue de Ponthieu
F-75008 Paris (FR)

Courier Press, Leamington Spa, England.

## Procédé et ensemble de transfert pneumatique d'un matériau pulvérulent

La présente invention a pour objet un procédé de transfert pneumatique d'un matériau pulvérulent ainsi qu'un dispositif pour sa mise en oeuvre.

De façon plus précise, elle s'applique au transfert pneumatique d'un matériau pulvérulent contenu dans un récipient grâce à des moyens pneumatiques permettant d'assurer une vidange complète du récipient par aspiration du matériau pulvérulent contenu dans ledit récipient.

Certains ensembles de transfert pneumatique d'un matériau pulvérulent, connus actuellement font appel à des moyens pneumatiques tels que des aspirateurs ou des buses d'aspiration fonctionnant en surpression ou en dépression et ils présentent les inconvénients:

a) de ne pas fonctionner en circuit fermé étanche;

b) de ne pas détruire, en cours d'aspiration, les parois des cratères en formation dans le récipient;

c) de ne pas assurer l'extraction de la totalité d'un produit (poudre ou granulé) colmatant ou adhérant contenu dans ledit récipient par balayage pneumatique des parois et du fond.

Parmi ces ensembles connus, l'un d'eux est décrit dans le brevet des Etats-Unis d'Amérique n° 4 029 364. L'ensemble pneumatique de transfert décrit dans ce brevet permet d'aspirer un matériau pulvérulent contenu dans un récipient. Cet ensemble comprend deux tubes coaxiaux. Le tube central permet l'aspiration du matériau pulvérulent, tandis que l'air sous pression est injecté dans l'espace formé entre les tubes pour aboutir dans une rampe dirigeant des jets d'air vers le fond du récipient.

Outre les inconvénients mentionnés plus haut, l'ensemble pneumatique décrit dans ce document a pour inconvénient de ne pas diriger un jet annulaire vers les parois du récipient, juste au-dessus du niveau du matériau dans le récipient, de manière à empêcher toute adhérence de matériau sur les parois du récipient. Il ne permet pas non plus une extraction parfaite du matériau, vers le fond du récipient.

La présente invention a pour but de remédier à ces inconvénients et permet d'assurer, dans des conditions satisfaisantes, l'extraction de la totalité d'un matériau pulvérulent contenu dans un récipient, en particulier d'un matériau pulvérulent colmatant, sous la forme de poudre ou sous la forme de granulés.

L'ensemble de transfert pneumatique d'un matériau pulvérulent selon l'invention comprend un récipient contenant le matériau pulvérulent et des moyens pneumatiques de vidange dudit récipient constitués par une canne d'aspiration apte à être montée de façon étanche dans l'axe dudit récipient et à être déplacée en translation le long de cet axe, ladite canne d'aspiration comprenant deux tubes coaxiaux, dits premier tube et deuxième tube, ouverts à leur extrémité inférieure, ledit premier tube délimitant dans ladite canne un conduit central d'extraction du matériau pulvérulent à transférer, caractérisé en ce que ledit deuxième tube délimite avec ledit premier tube un conduit annulaire d'introduction d'un fluide dans ledit récipient, ledit premier tube et ledit deuxième tube présentant à leur extrémité inférieure une forme telle que, lorsque ladite canne d'aspiration est montée dans l'axe dudit récipient, ledit conduit annulaire débouchant dans ledit récipient par une buse annulaire apte à diriger un jet de gaz sur les parois latérales dudit récipient en orientant ledit jet vers le fond dudit récipient, l'ensemble comportant en outre des moyens d'alimentation en gaz dudit conduit annulaire et des moyens d'aspiration pour extraire ledit gaz et ledit matériau pulvérulent par le conduit central d'extraction, ledit premier tube et ledit second tube étant réglables en translation, l'un par rapport à l'autre, de sorte qu'on peut contrôler les dimensions de l'ouverture de ladite buse afin que le jet de gaz sortant de ladite buse annulaire converge sur les parois latérales dudit récipient, lorsque ladite canne est montée dans l'axe dudit récipient, le niveau de convergence du jet de gaz sur les parois du récipient étant maintenu sensiblement au niveau du matériau pulvérulent dans le récipient.

L'ensemble tel que caractérisé ci-dessus présente notamment l'avantage de permettre d'assurer le transport pneumatique de la totalité du matériau pulvérulent contenu dans le récipient. En effet, grâce à la forme particulière de la buse annulaire qui permet de diriger un jet de gaz sur les parois latérales du récipient sensiblement au niveau du matériau le long des parois du récipient, on parvient à entraîner dans le conduit d'extraction toutes les particules de matériau pulvérulent, en particulier celles qui auraient tendance à être retenues sur les parois dudit récipient.

Par ailleurs, en distribuant ce jet de gaz par une buse annulaire, on réalise un confinement dynamique qui isole la partie basse du récipient, ce qui permet d'éviter que des particules de matériaux pulvérulents soient dispersées dans la partie supérieure du récipient et ne puissent de ce fait être entraînées par aspiration dans le conduit d'extraction.

De plus, l'introduction d'un gaz dans le récipient par la buse annulaire permet de détruire les flancs du cratère qui risque de se former lors de l'aspiration du matériau pulvérulent.

La disposition particulière des deux tubes qui constituent la canne d'aspiration, se révèle particulièrement avantageuse car elle permet de régler l'ouverture de la buse annulaire en fonction des dimensions du récipient de façon telle que le jet de gaz sortant de la buse annulaire puisse converger sur les parois latérales du récipient.

Selon une autre caractéristique de l'ensemble de transfert pneumatique de l'invention, le fond dudit récipient présente une forme adaptée à celle de la partie inférieure du conduit d'extraction de façon telle que, lorsque ladite canne est montée dans l'axe dudit récipient, le jet de gaz sortant par ladite buse annulaire entraîne le matériau pulvérulent vers le conduit central d'extraction de ladite canne d'aspiration.

Selon une autre caractéristique de l'ensemble de l'invention, la partie inférieure du conduit d'extraction a une section qui décroît depuis son extrémité inférieure vers son extrémité supérieure.

Avantageusement, cette partie inférieure du conduit d'extraction est délimitée par un prolongement de la paroi interne dudit premier tube, ce prolongement présentant en partie la forme d'une surface concave.

Dans ce cas, le fond dudit récipient est de préférence tel qu'il présente une surface convexe au droit dudit conduit d'extraction, ladite surface convexe étant raccordée aux parois latérales dudit récipient par l'intermédiaire d'au moins une surface concave.

En associant ainsi une canne d'aspiration présentant à son extrémité inférieure une forme adaptée à celle du fond du récipient, on assure encore dans de meilleures conditions la vidange complète du récipient, en favorisant en fin d'opération l'entraînement des dernières particules de produit situées sur le fond du récipient.

Selon un mode de réalisation préférentiel du dispositif de l'invention, la buse annulaire est délimitée par un prolongement de la paroi interne dudit second tube et par un prolongement de la paroi externe dudit premier tube, ledit prolongement de la paroi interne dudit premier tube formant une paroi tronconique dont chaque génératrice définit avec un plan horizontal un angle aigu $\beta$ et ledit prolongement de la paroi interne dudit second tube formant une paroi tronconique dont chaque génératrice définit avec un plan horizontal un angle aigu $\gamma$ supérieur à l'angle $\beta$.

Dans ce mode de réalisation, les angles $\beta$ et $\gamma$ sont choisis en fonction de la section de ladite canne d'aspiration et de la section dudit récipient de façon telle que, lorsque ladite canne d'aspiration est montée dans l'axe dudit récipient, le cercle d'intersection des deux cônes de 1/2 angle au sommet

$$(\frac{\pi}{2} - \beta) \text{ et } (\frac{\pi}{2} - \gamma)$$

qui définissent lesdites parois tronconiques, soit situé sur les parois latérales dudit récipient à un niveau $N_1$ par rapport au fond dudit récipient au plus égal au niveau $N_2$ de l'extrémité inférieure de ladite canne d'aspiration.

L'invention sera mieux comprise à la lecture de la description qui suit se référant au dessin annexé sur lequel:

— la figure 1 est une représentation schématique d'un ensemble de transfert pneumatique de matériau pulvérulent selon l'invention;
— la figure 2 représente en détail la partie inférieure de la canne d'aspiration de l'ensemble de transfert pneumatique de l'invention.

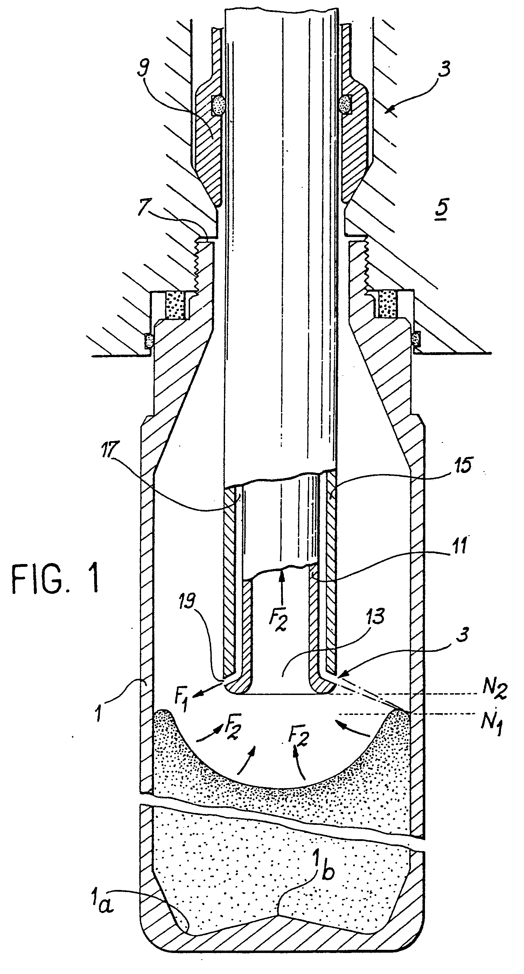

En se reportant à la figure 1, on voit que l'ensemble de transfert pneumatique comprend un récipient cylindrique 1 de section circulaire ou polygonale, ouvert à son extrémité supérieure et une canne d'aspiration 3 montée de façon étanche dans l'axe du récipient 1.

Le récipient 1 et la canne d'aspiration 3 sont montés sur un support 5. Dans ce but, le récipient 1 présente à son extrémité supérieure un filetage externe qui coopère avec un filetage correspondant prévu dans un épaulement 7 du support 5, et la canne d'aspiration 3 est montée de façon étanche dans un élément 9 qui assure l'obturation du récipient 1, et elle peut être positionnée à différents niveaux par rapport au fond du récipient 1.

Selon l'invention, la canne d'aspiration comprend deux tubes coaxiaux, un premier tube 11 qui délimite dans la canne un conduit central d'extraction 13 et un second tube 15 qui délimite avec ledit premier tube un conduit annulaire 17 d'introduction d'un fluide dans le récipient 1. A leur extrémité inférieure, les tubes 11 et 15 ont une forme telle que le conduit annulaire 17 débouche dans le récipient 1 par une buse annulaire 19 apte à diriger un jet de gaz sur les parois latérales du récipient 1 en orientant de plus le jet de gaz vers le fond de ce récipient.

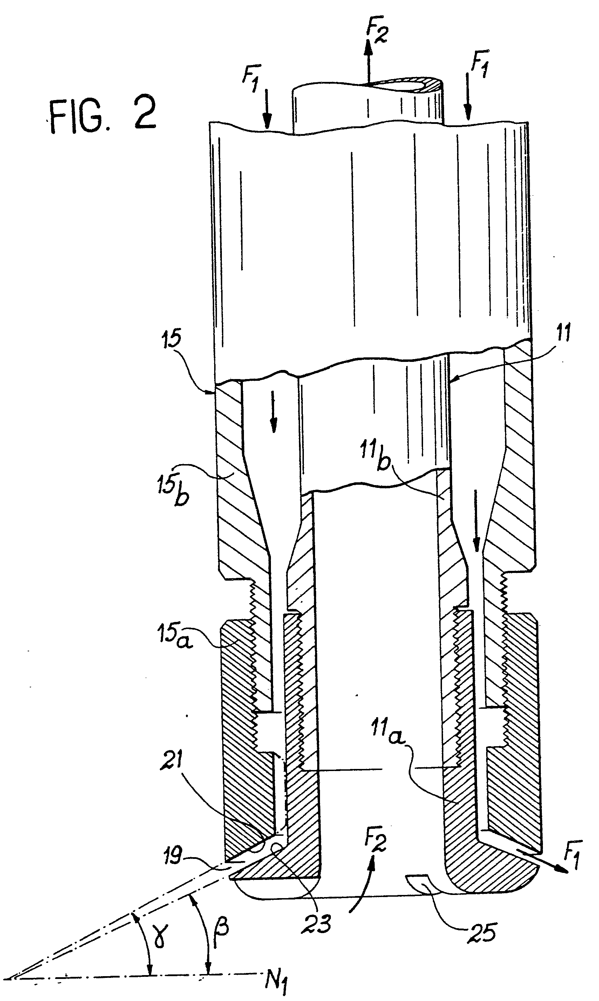

Comme on peut le voir plus en détail sur la figure 2, la buse annulaire 19 est délimitée par un prolongement 21 de la paroi interne du second tube 15 et par un prolongement 23 de la paroi externe du premier tube 11. Les prolongement 21 et 23 ont la forme de parois tronconiques dont les génératrices définissent respectivement avec un plan horizontal des angles aigus $\gamma$ et $\beta$.

On note que l'angle aigu $\gamma$ défini par une génératrice de la paroi tronconique 21 avec un plan horizontal, est supérieur à l'angle $\beta$ défini par une génératrice de la paroi tronconique 23 avec un plan horizontal.

Le jet de gaz sortant par la buse annulaire 19 est dirigé vers les parois latérales du récipient en étant de plus orienté vers le fond du récipient, ce que permet le nettoyage du fond du récipient lorsque la buse parvient au fond de celui-ci.

Au vu de la figure 2, on note aussi que la partie inférieure 11a du premier tube 11 et la partie inférieure 15a du second tube 15 sont réglables en translation l'une par rapport à l'autre pour régler les dimensions d'ouverture de la buse annulaire 19.

A cet effet, la partie 15a présente un filetage susceptible de coopérer avec un filetage correspondant de la partie supérieure 15b du tube 15 de sorte que l'on peut déplacer la partie 15a par rapport à la partie 15b. De même, la partie 11a présente un filetage que coopère avec un filetage correspondant de la partie 11b du tube 11 de façon à pouvoir déplacer cette partie 11a en translation.

Ce mode de montage des parties 15a et 11a se révèle particulièrement avantageux, car il permet ainsi de diminuer ou d'augmenter l'ouverture de la buse annulaire 19 et de ce fait, d'adapter les dimensions de cette ouverture pour qu'à la sortie de la buse annulaire, le jet de gaz guidé par les parois tronconiques délimitées par le prolongement interne du second tube et le prolongement externe du premier tube converge sensiblement sur les parois latérales du récipient 1, au niveau atteint par le matériau pulvérulent, dans le récipient.

Ce réglage pourrait bien entendu se faire par translation d'un tube par rapport à l'autre, commandé et bloqué à l'autre extrémité des deux tubes. Ce réglage dépend de la dimension du récipient. Pour un récipient donné, il est maintenu constant durant toute la vidange.

Enfin, on note que la paroi interne du premier tube 11 présente à son extrémité inférieure un prolongement 25 de forme telle que le conduit central d'extraction ait dans sa partie inférieure une section qui décroît régulièrement depuis son extrémité inférieure vers son extrémité supérieure.

Dans l'exemple représenté sur cette figure, le prolongement 25 présente en partie la forme d'une surface concave qui est adaptée à la forme du fond du récipient 1, qui présente une surface convexe 1b au droit du conduit d'extraction 13, cette surface convexe étant raccordée aux parois latérales du récipient par l'intermédiaire d'une surface concave.

Cette forme complémentaire entre l'extrémité inférieure du conduit d'extraction et le fond du récipient présente l'avantage de permettre un entraînement satisfaisant du matériau pulvérulent car les formes sont ajustées en fonction des dimensions pour que les flux de gas sortant par la buse annulaire soient guidés par les parois et le fond du récipient vers l'intérieur du conduit d'extraction.

Par ailleurs, on précise que dans ce mode de réalisation de la buse annulaire, les angles $\beta$ et $\gamma$ qui définissent respectivement l'inclinaison des parois tronconiques 23 et 21 par rapport à un plan horizontal, sont choisis en fonction de la section de la canne d'aspiration et de la section du récipient de façon telle que, lorsque la canne d'aspiration est montée dans le récipient 1, le cercle d'intersection des deux cônes de 1/2 angle au sommet

$$(\frac{\pi}{2} - \beta) \text{ et } (\frac{\pi}{2} - \gamma)$$

qui définissent les parois tronconiques, soit situé sur les parois latérales du récipient à un niveau $N_1$ par rapport au fond du récipient au plus égal au niveau $N_2$ de l'extrémité inférieure de ladite canne d'aspiration.

De plus, on précise que la différence entre les niveaux précités $N_2$ et $N_1$ est choisie en fonction de la nature de la poudre à transférer.

Le fonctionnement du dispositif est le suivant: le récipient étant rempli d'un matériau pulvérulent éventuellement colmatant, on isole complètement le récipient en montant de façon étanche la canne d'aspiration 3 dans l'ouverture correspondante du récipient par l'intermédiaire de l'élément 9. Puis on met en communication le conduit annulaire 17 à sa partie supérieure avec une source d'un gaz tel que de l'air, de l'azote, de l'argon ou un gaz neutre, et on relie le conduit d'extraction 13, à sa partie supérieure, à un dispositif d'aspiration non représenté sur le dessin. Ainsi, compte tenu de la différence de pression établie entre les deux conduits, le gaz introduit dans le conduit 17 est évacué par la buse annulaire 19 sous la forme d'un jet de gaz sous pression en suivant le trajet des flèches $F_1$, puis il est aspiré dans le conduit d'extraction 13, selon le trajet des flèches $F_2$, en entraînant avec lui le matériau pulvérulent présent dans le récipient. La canne d'aspiration est descendue dans le récipient au fur et à mesure de l'évacuation de la poudre de sorte que le jet de gaz converge le long des parois du récipient sensiblement au niveau atteint par le matériau, le long de ces parois.

Lorsque le produit à transférer est fortement colmatant et que les particules de poudre ont une densité importante, la poudre peut avoir tendance à cratériser et dans ce cas, on peut déplacer la canne d'aspiration en cours d'opération pour la positionner par des mouvements de montée et de descente, à des niveaux différents, de sorte que le flux sortant par la buse annulaire détruise le cratère et vienne ensuite frapper directement les parois latérales du récipient 1.

A titre d'exemple on donne, ci-après, les caractéristiques géométriques d'un ensemble de transfert pneumatique selon l'invention.

Dans cet ensemble, le récipient est cylindrique et présente une section transversale circulaire d'un diamètre de 141 mm, le fond du récipient présentant, dans l'axe du récipient, une surface convexe d'un rayon de courbure d'environ 20 mm qui est raccordée aux parois latérales du récipient par l'intermédiaire de deux surfaces concaves d'un rayon de courbure de 15 mm.

Dans cet exemple, la canne d'aspiration comprend un premier tube ayant un diamètre interne de 25 mm et un second tube d'un diamètre externe de 50 mm qui définissent entre eux dans leur partie inférieure un conduit annulaire d'une épaisseur de 1 mm.

Les parois tronconiques qui définissent la buse annulaire présentent une inclinaison telle

que l'angle $\beta$ soit égal à 8° et l'angle $\gamma$ égal à 9°.

A sa partie inférieure, le premier tube présente un prolongement ayant en partie la forme d'une surface concave.

On précise qu'avec un tel ensemble on peut établir un débit de gaz de l'ordre de 30 m³/h, ce qui conduit à des vitesses de gaz à la sortie de la buse d'environ 25 m/s.

Ainsi, on obtient une vidange complète du récipient, la quantité de poudre non transférée étant inférieure à la limite décelable.

Par ailleurs, on précise que dans ce mode de réalisation, il est avantageux que les parois du récipient et de la canne d'aspiration soient usinées de façon à les rendre les plus lisses possibles par exemple par microbillage.

**Revendications**

1. Ensemble de transfert pneumatique d'un matériau pulvérulent, comprenant un récipient cylindrique (1) contenant ledit matériau pulvérulent et des moyens pneumatiques de vidange dudit récipient, lesdits moyens pneumatiques de vidange étant constitués par une canne d'aspiration (3) apte à être montée de façon étanche dans l'axe dudit récipient, et à être déplacée en translation le long de cet axe, ladite canne d'aspiration (3) comprenant deux tubes coaxiaux, dits premier tube (11) et deuxième tube (15), ouverts à leur extrémité inférieure, ledit premier tube (11) délimitant dans ladite canne un conduit central d'extraction (13) du matériau pulvérulent à transférer, caractérisé en ce que ledit deuxième tube (15) délimite avec ledit premier tube (11) un conduit annulaire (17) d'introduction d'un fluide dans ledit recipient,. ledit premier tube (11) et ledit deuxième tube (15) présentant à leur extrémité inférieure une forme telle que, lorsque ladite canne d'aspiration (3) est montée dans l'axe dudit récipient, ledit conduit annulaire (17) débouche dans ledit récipient par une buse annulaire (19) apte à diriger un jet de gaz sur les parois latérales dudit récipient en orientant ledit jet vers le fond dudit récipient (1), l'ensemble comportant en outre des moyens d'alimentation en gaz dudit conduit annulaire et des moyens d'spiration pour extraire ledit gaz et ledit matériau pulvérulent par le conduit central (13) d'extraction, ledit premier tube (11) et ledit seconde tube (15) étant réglables en translation, l'un par rapport à l'autre, de sorte qu'on peut contrôler les dimensions de l'ouverture de ladite buse (19) afin que le jet de gaz sortant de ladite buse annulaire converge sur les parois latérales dudit récipient (1), lorsque ladite canne (3) est montée dans l'axe dudit récipient, le niveau ($N_1$) de convergence du jet de gaz sur les parois du récipient (1) étant maintenu sensiblement au niveau du matériau pulvérulent dans le récipient.

2. Ensemble selon la revendication 1, caractérisé en ce que le fond dudit récipient (1a, 1b) présente une forme adaptée à celle de la partie inférieure du conduit d'extraction (13) de façon telle que, lorsque ladite canne est montée dans l'axe dudit récipient, le jet de gaz sortant par ladite buse annulaire (19) entraîne le matériau pulvérulent vers le conduit central (13) d'extraction de ladite canne d'aspiration.

3. Ensemble selon l'une quelconque des revendications 1 et 2, caractérisé en ce que la partie inférieure du conduit d'extraction (13) a une section qui décroît depuis son extrémité inférieure vers son extrémité supérieure.

4. Ensemble selon la revendication 3, caractérisé en ce que la partie inférieure du conduit d'extraction (13) est délimitée par un prolongement de la paroi interne dudit premier tube, ce prolongement présentant en partie la forme d'une surface concave.

5. Ensemble selon la revendication 4, caractérisé en ce que le fond (1a, 1b) dudit récipient est tel qu'il présente une surface convexe au droit dudit conduit d'extraction (13), ladite surface convexe étant raccordée, aux parois latérales dudit récipient (1) par l'intermédiaire d'au moins une surface concave.

6. Ensemble selon l'une quelconque des revendications 1 à 3, caractérisé en ce que ladite buse annulaire (19) est délimitée par un prolongement de la paroi interne dudit second tube (15) et par un prolongement de la paroi externe dudit premier tube (11), ledit prolongement de la paroi externe dudit premier tube (11) formant une paroi tronconique dont chaque génératrice définit avec un plan horizontal un angle aigu $\beta$ et ledit prolongement de la paroi interne dudit second tube (15) formant une paroi tronconique dont chaque génératrice définit avec un plan horizontal un angle aigu $\gamma$ supérieur à l'angle $\beta$.

7. Ensemble selon la revendication 6, caractérisé en ce que les angles $\beta$ et $\gamma$ sont choisis en fonction de la section de ladite canne d'aspiration (3) et de la section dudit récipient (1) de façon telle que, lorsque ladite canne d'aspiration (3) est montée dans l'axe dudit récipient, le cercle d'intersection des deux cônes de 1/2 angle au sommet

$$(\frac{\pi}{2} - \beta) \text{ et } (\frac{\pi}{2} - \gamma)$$

qui définissent lesdites parois tronconiques, soit situé sur les parois latérales dudit récipient à un niveau $N_1$ par rapport au fond dudit récipient au plus égal au niveau $N_2$ de l'extrémité inférieure de ladite canne d'aspiration.

8. Ensemble selon la revendication 1, caractérisé en ce que la dimension de l'ouverture de la buse annulaire (19) est réglable pour que le jet de gaz converge vers les parois du récipient (1) au cours de l'aspiration.

9. Procédé selon la revendication 8, caractérisé en ce que la dimension de l'ouverture de la buse (19) est réglée pour que le jet de gaz converge vers les parois, au-dessus du niveau du matériau dans le récipient (1).

## Claims

1. Apparatus for the pneumatic transfer of a pulverulent material comprising a cylindrical container (1) for said pulverulent material and pneumatic discharge means for said container, said pneumatic discharge means comprising an aspiration rod (3) adapted to be mounted in fluid-tight manner on the axis of said container, said aspiration rod (3) comprising two coaxial tubes, a first tube (11) and second tube (15), open at their lower ends, said first tube providing in said rod a central extraction conduit (13) for the transfer of pulverulent material, characterized in that the second tube (15) and first tube (11) delimit an annular conduit (17) for the introduction of fluid into said container, the lower ends of said first tube (11) and second tube (15) having such a shape that, when the aspiration rod is mounted axially of said container, said annular conduit opens into said container through an annular nozzle (19) adapted to direct a jet of gas on the side walls and towards the bottom of said container (1), said apparatus also comprising means for supplying gas to said annular conduit, and aspirating means to extract said gas and said pulverulent material through the central extraction conduit (13), said first tube (11) and said second tube (15) being controllably extensible with respect to one another, whereby to control the dimensions of the opening of said nozzle (19) so that a gas jet from said nozzle converges towards the side walls of said container (1), when said rod (3) is located axially of said container, the level of convergence ($N_1$) of the gas jet on the walls of said container being maintained substantially at the level of pulverulent material in the container.

2. Apparatus according to Claim 1 characterized in that the bottom of said container (1a, 1b) has a form adapted to that of the lower part of the extraction conduit (13) such that, when the said rod is located axially of said container, the gas jet from the said annular nozzle (19) entraining pulverulent material towards the central extraction conduit (13) of said aspiration rod.

3. Apparatus according to either of Claims 1 and 2 characterized in that the lower part of the extraction conduit (13) has a second decreasing from its lower end towards its upper end.

4. Apparatus according to Claim 3 characterized in that the lower part of the extraction conduit (13) is delimited by a prolongation of the internal wall of said first tube, said prolongation having in part a concave surface.

5. Apparatus according to Claim 4 characterized in that the bottom (1a, 1b) of said container provides a convex surface towards said extraction conduit (13), said convex surface leading into side walls of said container (1) through at least one concave surface.

6. Apparatus according to any one of Claims 1 to 3 characterized in that the said annular nozzle (19) is delimited by a prolongation of the internal wall of said second tube (15) and by a prolongation of the external wall of said first tube (11), said prolongation of the external wall of said first tube (11) forming a frusto-conical wall each generatrix of which forms an acute angle $\beta$ with a horizontal plane, and said prolongation of the internal wall of said second tube (15) forming a frusto-conical wall each generatrix of which forms, with a horizontal plane, an acute angle $\gamma$ which is greater than the angle $\beta$.

7. Apparatus according to Claim 6 characterized in that the angles $\beta$ and $\gamma$ are selected according to the cross-section of said aspiration rod (3) and the cross-section of said container (1) such that when the said aspiration rod (3) is located axially of said container, the circle of intersection of the two cones, having apices with respective half-angles of

$$(\pi/2-\beta) \text{ and } (\pi/2-\gamma),$$

which define said frusto-conical walls, is situated on the walls of said container at a level $N_1$ above the bottom of said container, at least equal to the level $N_2$ of the lower end of said aspiration rod.

8. Apparatus according to Claim 1 characterized in that the dimensions of the opening of the annular nozzle (19) are adjustable such that the gas jet converges towards the walls of container (1) during the aspiration.

9. Apparatus according to Claim 8 characterized in that the dimensions of the opening of the annular nozzle (19) are adjustable such that the gas jet converges towards the walls, above the level of material in the container.

## Patentansprüche

1. Vorrichtung zum pneumatischen Überführen eines staubförmigen Materials, bestehend aus einem zylinderförmigen Behälter (1), welcher das staubförmige Material und pneumatische Mittel zum Leeren des Behälters enthält, wobei die pneumatischen Mittel zum Leeren von einem Saugrohr (3) gebildet sind, welches dicht auf der Achse des Behälters befestigtbar und längs dieser Achse verschiebbar ist und zwei koaxiale Rohre aufweist, die als erstes Rohr (11) und als zweites Rohr (15) bezeichnet und an ihrem unteren Ende offen sind, wobei das erste Rohr (11) in dem Saugrohr ein Austragsrohr (13) für das zu überführende, staubförmige Material begrenzt, dadurch gekennzeichnet, daß das zweite Rohr (15) mit dem ersten Rohr (11) einen ringförmigen Einführkanal (17) für ein Fluid in den Behälter begrenzen, daß das erste Rohr (11) und das zweite Rohr (15) an ihrem unteren Ende mit einer solchen Form ausgebildet sind, daß, wenn das Saugrohr (3) auf der Achse des Behälters befestigt ist, der ringförmige Kanal (17) in dem Behälter mit einer ringförmigen Düse (19) mündet, durch die ein Gas strahl auf die Seitenwände des Behälters lenkbar ist, wobei der Strahl in Richtung auf den Boden des Behälters (1) gerichtet ist, daß die Vorrichtung ferner Mittel zur Versorgung des ringförmigen Kanals mit Gas und Ansaugmittel umfaßt, um das Gas und das pulverförmige Material durch das mittlere Austragsrohr (13) auszubringen, daß das erste Rohr (11) und das zweite Rohr (15) relativ zueinander verschiebbar einstellbar sind, derart, daß man die Abmessungen der Öffnung der Düse (19) steuern kann, damit der aus der ringförmigen Düse austretende Gasstrahl auf den Seitenwänden des Behälters (1) konvergiert, wenn das Saugrohr (3) auf der Achse des Behälters befestigt ist, wobei die Höhe (N1) der Konvergenz des Gasstrahls auf den Wänden des Behälters (1) im wesentlichen auf der Höhe des pulverförmigen Materials in dem Behälter gehalten wird.

2. Vorrichtung nach Anspruch 1, dadurch gekennzeichnet, daß der Boden des Behälters (1a, 1b) eine Form aufweist, welche an diejenige des unteren Teils des Austragsrohrs (13) derart angepaßt ist, daß, wenn das Saugrohr auf der Achse des Behälters befestigt ist, der aus der ringförmigen Düse (19) austretende Gasstrahl das staubförmige Material zu dem mittleren Austragrohr (13) des Saugrohrs mitnimmt.

3. Vorrichtung nach Anspruch 1 oder 2, dadurch gekennzeichnet, daß der untere Teil des Austragrohrs (13) einen Querschnitt aufweist, welcher von seinem unteren Ende zu seinem oberen Ende abnimmt.

4. Vorrichtung nach Anspruch 3, dadurch gekennzeichnet, daß der untere Teil des Austragrohrs (13) von einer Verlängerung der inneren Wand des ersten Rohres begrenzt ist, wobei diese Verlängerung zum Teil die Form einer konkaven Oberfläche aufweist.

5. Vorrichtung nach Anspruch 4, dadurch gekennzeichnet, daß der Boden (1a, 1b) des Behälters derart ausgebildet ist, daß er an der Stelle des Austragsrohrs (13) eine konvexe Oberfläche aufweist, wobei die konvexe Oberfläche mit den seitlichen Wänden des Behälters (1) über mindestens eine konkave Oberfläche verbunden ist.

6. Vorrichtung nach irgendeinem der Ansprüche 1 bis 3, dadurch gekennzeichnet, daß die ringförmige Düse (19) durch eine Verlängerung der inneren Wand des zweiten Rohrs (15) und durch eine Verlängerung der äußeren Wand des ersten Rohres (11) begrenzt ist, daß die Verlängerung der äußeren Wand des ersten Rohres (11) eine kegelstumpfförmige Wand bildet, von der jede Erzeugende mit einer horizontalen Ebene einen spitzen Winkel ß einschließt, und daß die Verlängerung der inneren Wand des zweiten Rohres (15) eine kegelstumpfförmige Wand bildet, von der jede Erzeugende mit einer horizontalen Ebene einen spitzen Winkel $\gamma$ einschließt, welcher größer als der Winkel $\beta$ ist.

7. Vorrichtung nach Anspruch 6, dadurch gekennzeichnet, daß die Winkel $\beta$ und $\gamma$ als Funktion des Querschnittes des Saugrohrs (3) und des Querschnittes des Behälters (1) derart gewählt sind, daß, wenn das Saugrohr (3) auf der Achse des Behälters befestigt ist, der Schnittkreis der zwei Kegel mit dem halben Öffnungswinkel

$$(\frac{\pi}{2} - \beta) \text{ und } (\frac{\pi}{2} - \gamma)$$

welche die Kegelstumpfwände festlegen, auf den seitlichen Wänden des Behälters auf der Höhe $N_1$ in bezug auf den Boden des Behälters und höchstens auf einer Höhe $N_2$ des unteren Endes des Saugrohres liegt.

8. Vorrichtung nach Anspruch 1, dadurch gekennzeichnet, daß die Abmessung der Öffnung der ring-förmigen Düse (19) einstellbar ist, damit der Gasstrahl in Richtung auf die Wände des Behälters (1) während des Ansaugvorganges konvergiert.

9. Vorrichtung nach Anspruch 8, dadurch gekennzeichnet, daß die Abmessung der Öffnung der Düse (19) so eingestellt ist, daß der Gasstrahl in Richtung auf die Wände oberhalb des Pegels des in dem Behälter (1) vorhandenen Materials konvergiert.

FIG. 1

0 008 270

FIG. 2